# EUROPEAN PATENT SPECIFICATION

(11) **EP 2 916 509 B1**
(45) Date of publication and mention of the grant of the patent: **18.05.2016**
(21) Application number: 14157508.4
(22) Date of filing: 03.03.2014
(51) Int. Cl.: H04L 29/06

(54) **NETWORK AUTHENTICATION METHOD FOR SECURE USER IDENTITY VERIFICATION**
Netzwerkauthentifizierungsverfahren für sichere Benutzeridentitätsverifizierung
Procédé d'authentification de réseau pour la vérification sécurisée d'identité d'utilisateur

(43) Date of publication of application: 09.09.2015
(73) Proprietor: Keypasco AB, 41118 Gothenburg (SE)
(72) Inventor: Lin, Maw-Tsong, 11463 Taipei City (TW); Skygebjerg, Per, SE-411 18 Gothenburg (SE)
(74) Representative: Strehl Schübel-Hopf & Partner

(56) References cited:
- EP-A2- 2 355 443
- WO-A1-02/089018

## Description

The invention relates to network identity authentication, and more particularly to a network authentication method for secure verification of identity of a user.

Currently, a variety of web services, such as cloud services, have become increasingly popular. In order to secure the web services, user identity verification is absolutely necessary.

However, due to increasing numbers of web users and web crimes, and continuous progress of criminal techniques, for example, an Internet content provider (ICP) needs to provide to each user an identity verification device, e.g., a USB device loaded with a public key infrastructure (PKI) certificate, an integrated circuit (IC) electronic card or a dynamic token. Thus, the cost of customer service for personalization, distribution and troubleshooting is considerable. Further, it is quite inconvenient that the user needs to remember the user ID and the password for each of different ICPs and to have different identity verification devices for the different ICPs. Moreover, for the different ICPs, duplication of investment in user identity authentication may occur.

The document EP 2 355 443, 10th August 2011 (2011-08-10) discloses a network authentication method to be implemented using a network authentication device and a user end for authenticating the user end. The user end stores a terminal program and includes a plurality of hardware components each of which has a unique identification code.

Therefore, an object of the present invention is to provide a network authentication method for secure verification of the identity of a user that can overcome the aforesaid drawbacks of the prior art.

According to the present invention, there is provided a network authentication method to be implemented using a user terminal, a downloading unit, a content-provider server and a plurality of identity verification servers for secure verification of the identity of a user of the user terminal. The network authentication method of this invention comprises the following steps of:
a) the user terminal downloading a scan program and an asymmetrical public key from the downloading unit;
b) each of the identity verification server downloading from the downloading unit a respective set of encrypted information that is signed with an asymmetrical private key and that includes an encrypted web address of the identity verification server, and storing reference hardware scan data that is associated with the user terminal and that corresponds uniquely to a user identifier of the user;
c) in response to a user login request from the user terminal for accessing the content-provider server through a first communication link, the content-provider server transmitting to one of the identity verification servers a verification notification that the identity of the user needs to be verified, and redirecting the user terminal for connecting with said one of the identity verification servers through a second communication link;
d) said one of the identity verification servers transmitting to the user terminal the respective set of encrypted information downloaded in step b) through the second communication link;
e) the user terminal determining, based on the respective set of encrypted information transmitted in step d) and the asymmetrical public key downloaded in step a), whether said one of the identity verification servers is currently valid to perform identity verification;
f) upon determining that said one of the identity verification servers is currently valid to perform identity verification, the user terminal executing the scan program downloaded in step a) to obtain hardware scan data associated with the user terminal, and transmitting the hardware scan data thus obtained to said one of the identity verification servers through the second communication link; and
g) said one of the identity verification servers verifying the identity of the user based on relationship between the hardware scan data received from the user terminal in step f) and the reference hardware scan data stored in step b), and notifying the content-provider server of a verification result.

Other features and advantages of the present invention will become apparent in the following detailed description of the preferred embodiment with reference to the accompanying drawings, of which:
Figure 1 is a schematic block diagram illustrating a network authentication system that is configured for implementing a network authentication method according to the preferred embodiment of the present invention;
Figure 2 is a flow chart illustrating a registration procedure of the network authentication method of the preferred embodiment;
Figure 3 is a flow chart illustrating a login procedure of the network authentication method of the preferred embodiment;
Figure 4 is a flow chart of a procedure illustrating how one of identity verification servers is determined to perform identity verification in the preferred embodiment; and
Figure 5 is a flow chart of a procedure illustrating how a user terminal determines whether said one of the identity verification servers is currently valid to perform identity verification in the preferred embodiment.

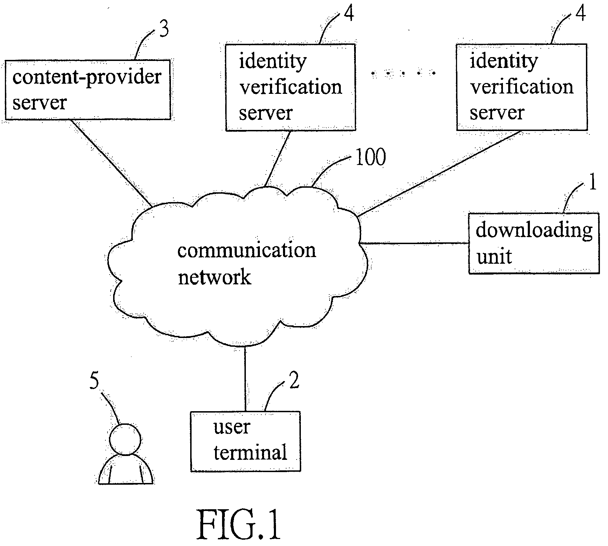

Referring to Figure 1, a network authentication system is used to implement a network authentication method for secure verification of the identity of a user 5 according to the preferred embodiment of the present invention. The network authentication system includes a downloading unit 1, a user terminal 2 owned by the user 5, a content-provider server 3 (e.g., an internet content provider or ICP), and a plurality of identity verification servers 4. For exemplary purposes, the user terminal 2 is owned by the user 5, and may be an electronic device capable of Internet browsing or data communication, such as a notebook computer, a smart phone, a personal digital assistant, etc. The user terminal 2 includes a plurality of hardware components (not shown), such as a central processing unit, a basic input/output system (BIOS) unit, a storage device, a network interface, a motherboard, etc., each of which has a unique identification code. The content-provider server 3 may be, but is not limited to, a web bank server, an online game server, or any other server that provides a network service requiring identity verification, such as a portal website. The identity verification servers 4 are ideally authorized by the downloading unit 1 to perform third-party identity verification, and may be, but are not limited to, social networking websites, such as Google, Yahoo, Facebook, etc. The downloading unit 1 includes a database unit (not shown) for storing at least one scan program, at least one pair of asymmetrical public and private keys, and a plurality of sets of encrypted information corresponding respectively to the identity verification servers 4. Each set of encrypted information is signed with the asymmetrical private key, and includes an encrypted web address of a respective one of the identity verification servers 4. In particular, each set of encrypted information has been processed with the asymmetrical private key to create a digital signature, and the asymmetrical public key is used to verify the digital signature. The downloading unit 1, the user terminal 2, the content-provider server 3 and the identity verification servers 4 are connected to a communication network 100.

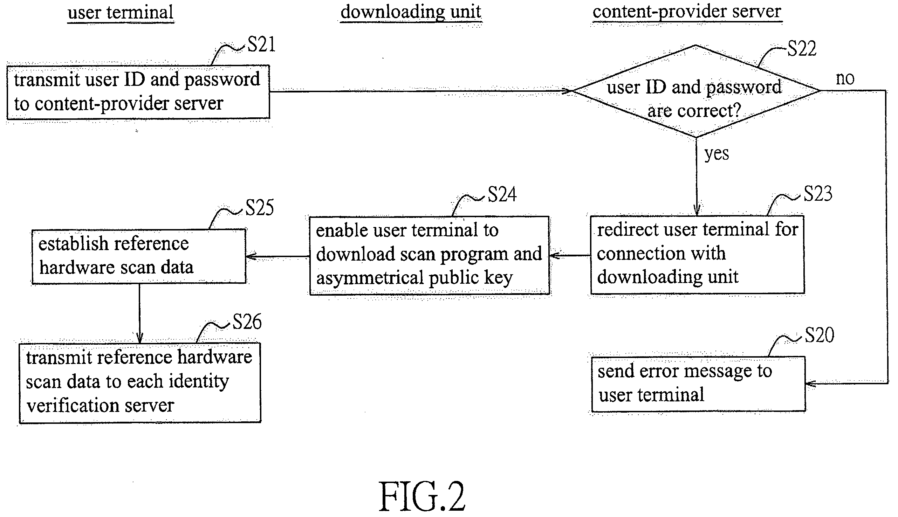

Referring to Figures 1 and 2, the downloading unit 1 cooperates with the user terminal 2 and the content-provider server 3 to implement a registration procedure of the network authentication method of the preferred embodiment according to the present invention. The registration procedure of the network authentication method of the preferred embodiment includes the following steps. It is noted that, prior to the registration procedure, each of the identity verification servers 4 is connected to the downloading unit 1 through the communication network 100 for downloading a respective set of encrypted information from the downloading unit 1.

In step S21, the user 5 inputs a user identification (ID) serving as a user identifier, and a password using a user input interface (not shown) of the user terminal 2 at a website provided by the content-provider server 3. The user ID and the password are then transmitted from the user terminal 2 to the content-provider server 3 via the communication network 100.

In step S22, in response to receipt of the user ID and the password, the content-provider server 3 is operable to check whether the user ID and the password are correct. If the result is affirmative, the flow proceeds to step S23. Otherwise, the content-provider server 3 is operable to send an error message to the user terminal 2 for displaying on a display device (not shown) of the user terminal 2 (step S20).

In step S23, the content-provider server 3 is operable to redirect the user terminal 2 for connection with the downloading unit 1.

In step S24, the downloading unit 1 is operable to enable the user terminal 2 to download the scan program and the asymmetrical public key therefrom.

In step S25, after the user terminal 2 stores the scan program and the asymmetrical public key, the user terminal 2 is operable to execute the scan program for scanning the hardware components of the user terminal 2 to obtain the identification codes of the hardware components, and for establishing reference hardware scan data according to the identification codes of the hardware components thus obtained. The reference hardware scan data is associated with the user terminal 2, and corresponds uniquely to the user identifier of the user 5.

In step S26, the user terminal 2 is operable to transmit the reference hardware scan data to each of the identity verification servers 4 via the communication network 100, so that each of the identity verification servers 4 stores the reference hardware scan data received from the user terminal 2.

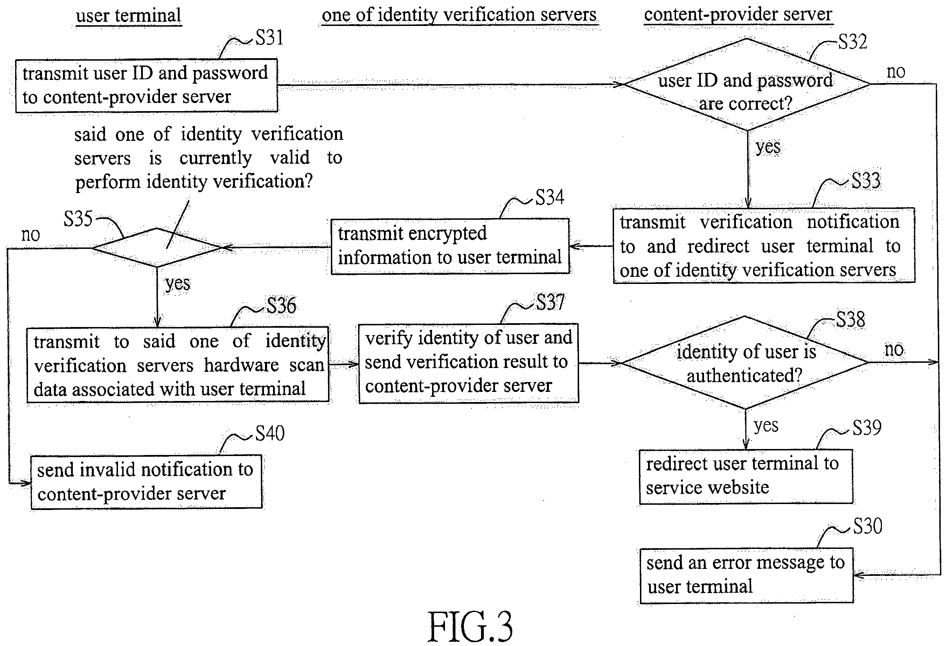

Referring to Figures 1 and 3, the network authentication system implements a login procedure of the network authentication method of the preferred embodiment. The login procedure of the network authentication method of the preferred embodiment includes the following steps.

In step S31, the user 5 inputs the user ID and the password using the user input interface of the user terminal 2 at the service website provided by the content-provider server 3, and the user terminal 2 is operable to transmit the user ID and the password to the content-provider server 3 through a first communication link over the communication network 100.

In step S32, in response to receipt of the user ID and the password from the user terminal 2, the content-provider server 3 is operable to check whether the user ID and the password are correct. If the result is affirmative, the flow proceeds to step S33. Otherwise, the content-provider server 3 is operable to send an error message to the user terminal 2 for displaying on the display device of the user terminal 2 (step S30).

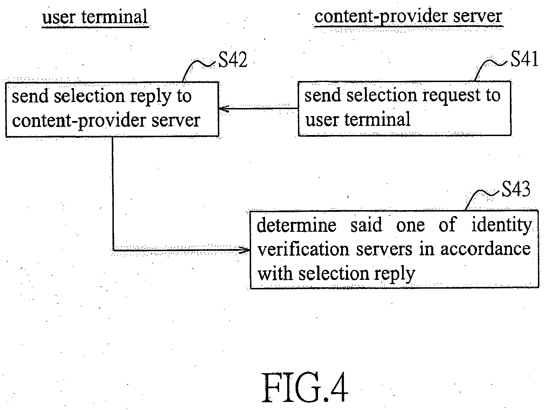

In step S33, the content-provider server 3 is operable to transmit to one of the identity verification servers 4 a verification notification that the identity of the user 5 needs to be verified. The content-provider server 3 is further operable to redirect the user terminal 2 for connecting with said one of the identity verification servers 4 through a second communication link that is separate from the first communication link. It is noted that, in one embodiment, said one of the identity verification servers 4 is determined by the content-provider server 3. In another embodiment, said one of the identity verification servers 4 may be determined by the user 5. Referring further to Figure 4, a procedure is shown to illustrate how one of the identity verification servers 4 for performing identity verification is determined by the user 5. In sub-step S41, the content-provider server 3 is operable to send to the user terminal 2 a selection request that includes a list of option items, which represent respectively the identity verification servers 4. In response to the selection request from the content-provider server 3, the user terminal 2 is operable to send to the content-provider server 3 a selection reply that indicates a desired one of the option items representing a corresponding one of the identity verification servers 4 (sub-step S42). Therefore, the content-provider server 3 is operable to determine the corresponding one of the identity verification servers 4 for performing identity verification in accordance with the selection reply (sub-step S43).

In step S34, in response to receipt of the verification notification from the content-provider server 3, said one of the identity verification servers 4 is operable to transmit the respective set of encrypted information stored therein to the user terminal 2 through the second communication link.

In step S35, upon receipt of the respective set of encrypted information from said one of the identity verification servers 4, the user terminal 2 is operable to determine, based on the respective set of encrypted information and the asymmetrical public key stored in step S24 of the registration procedure, whether said one of the identity verification servers 4 is currently valid to perform identity verification.

In one embodiment, the user terminal 2 is operable to decrypt the encrypted web address of the respective set of encrypted information using the asymmetrical public key. Upon successful decryption of the encrypted web address, the user terminal 2 determines that said one of the identity verification servers 4 is currently valid to perform identity verification. Then, the flow proceeds to step S36. On the other hand, upon failed decryption of the encrypted web address of the encrypted information, it is determined by the user terminal 2 that said one of the identity verification servers 4 is currently invalid to perform identity verification. Then, the user terminal 2 is operable to send to the content-provider server 3 an invalid notification that said one of the identity verification servers 4 is invalid to perform identity verification (step S40).

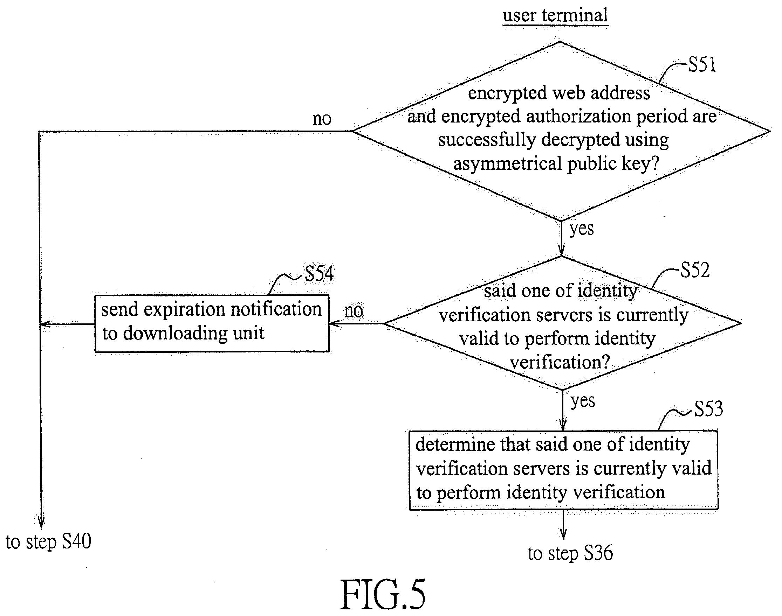

In another embodiment, each set of encrypted information, which is stored in the database unit of the downloading unit 1 and corresponds to one of the identity verification servers 4, further includes an encrypted authorization period associated with the identity verification server 4. Referring further to Figure 5, a procedure is shown to illustrate how the user terminal 2 determines, in step S35, whether said one of the identity verification servers 4 is currently valid to perform identity verification. In sub-step S51, the user terminal 2 is operable to determine whether the encrypted web address and the encrypted authorization period (i.e., the set of encrypted information) of said one of the identity verification servers 4 are successfully decrypted using the asymmetrical public key. If the result is negative, the flow goes to step S40 of Figure 3. On the other hand, upon successful decryption of the encrypted web address and the encrypted authorization period associated with said one of the identity verification servers 4, the user terminal 2 is operable to determine whether the current date is within the decrypted authorization period associated with said one of the identity verification servers 4 (sub-step S52). If the result is affirmative, the user terminal 2 determines that said one of the identity verification servers 4 is currently valid to perform identity verification (step S53). Then, the flow goes to step 36 of Figure 3. On the other hand, when the user terminal 2 determines that the current date is not within the decrypted authorization period associated with said one of the identity verification servers 4, the user terminal 2 is operable to send to the downloading unit 1 an expiration notification that the authorization period associated with said one of the identity verification servers 4 has expired (step S54). Then, the flow goes to step S40 of Figure 3.

In step S36, the user terminal 2 is operable to execute the scan program for scanning the hardware components of the user terminal 2 to obtain the identification codes of the hardware components that serve as hardware scan data associated with the user terminal 2, and to transmit the hardware scan data thus obtained to said one of the identity verification servers 4.

In step S37, upon receipt of the hardware scan data from the user terminal 2, said one of the identity verification servers 4 is operable to compare the hardware scan data with the reference hardware scan data stored therein during the registration procedure of the user 5 for verifying the identity of the user 5 associated with the user terminal 2, and to send a verification result to the content-provider server 3. When the hardware scan data obtained in step S36 does not conform with the reference hardware scan data stored in said one of the identity verification servers 4, the verification result indicates that the verification of the identity of the user 5 has failed. On the other hand, when the hardware scan data obtained in step S36 conforms with the reference hardware scan data stored in said one of the identity verification servers 4, the verification result indicates that the verification of the identity of the user 5 is successful.

In step S38, the content-provider server 3 is operable to determine, based on the verification result from said one of the identity verification servers 4, whether the identity of the user 5 is authenticated. When the verification result indicates that the verification of the identity of the user 5 has failed, it is determined by the content-provider server 3 that the identity of the user 5 is not authenticated. Thus, the flow goes to step S30. In this case, the user terminal 2 is denied access to the service website provided by the content-provider server 3. On the other hand, when the verification result indicates that the verification of the identity of the user 5 is successful, it is determined by the content-provider server 3 that the identity of the user 5 is authenticated. Then, the content-provider server 3 is operable to redirect the user terminal 2 for connecting with the service website provided by the content-provider server 3 (step S39). Therefore, the user terminal 2 is authorized to access the service website.

In sum, the network authentication method according to this invention has the following advantages:
1. Since the user terminal 2 is dynamically directed to one of the identify verification servers 4 for further identity verification (i.e., the user terminal 2 may be directed to a different identify verification server 4 every time), and since the respective set of encrypted information stored in each identity verification server 4 and the asymmetrical public key stored in the user terminal 2 may be randomly updated in response to notification from the downloading unit 1 as required, multi-authentication for user identity can be achieved using the downloading unit 1 that provides the respective set of encrypted information to each identity verification server 4, and the asymmetrical public key and the scan program to the user terminal 2.
2. Every time the user terminal 2 implements step S36 of the login procedure of the network authentication method, the user terminal 2 may execute the scan program for scanning the hardware components of the user terminal 2 to obtain the hardware scan data according to the identification codes of the hardware components, and the hardware scan data thus obtained for subsequent use in authenticating the identity of the user by said one of the identity verification servers 4 is dynamic data. Thus, a network content provider does not need to purchase additional equipment for identity authentication, and does not need to provide the user with a dynamic token, an IC electronic card, or a USB device with a PKI certificate. Also, the user 5 does not need to have additional authentication devices for different service websites.
3. Since the user terminal 2 is connected to the content-provider server 3 through the first communication link and is connected to said one of the identity verification servers 4 through the second communication link, it is relatively difficult to attack the first and second communication links simultaneously for stealing and/or tampering the data sent by the user terminal 2.

## Claims

1. A network authentication method to be implemented using a user terminal (2), a downloading unit (1), a content-provider server (3) and a plurality of identity verification servers (4) for secure verification of identity of a user (5) of the user terminal (2), said network authentication method being **characterized by** the following steps of:
a) the user terminal (2) downloading a scan program and an asymmetrical public key from the downloading unit (1) ;
b) each of the identity verification servers (4) downloading from the downloading unit (1) a respective set of encrypted information that is signed with an asymmetrical private key and that includes an encrypted web address of the identity verification server (4), and storing reference hardware scan data that is associated with the user terminal (2) and that corresponds uniquely to a user identifier of the user (5) ;
c) in response to a user login request from the user terminal (2) for accessing the content-provider server (3) through a first communication link, the content-provider server (3) transmitting to one of the identity verification servers (4) a verification notification that the identity of the user (5) needs to be verified, and redirecting the user terminal (2) for connecting with said one of the identity verification servers (4) through a second communication link;
d) said one of the identity verification servers (4) transmitting to the user terminal (2) the respective set of encrypted information downloaded in step b) through the second communication link;
e) the user terminal (2) determining, based on at least the respective set of encrypted information transmitted in step d) and the asymmetrical public key downloaded in step a), whether said one of the identity verification servers (4) is currently valid to perform identity verification;
f) upon determining that said one of the identity verification servers (4) is currently valid to perform identity verification, the user terminal (2) executing the scan program downloaded in step a) to obtain hardware scan data associated with the user terminal (2), and transmitting the hardware scan data thus obtained to said one of the identity verification servers (4) through the second communication link; and
g) said one of the identity verification servers (4) verifying the identity of the user (5) based on relationship between the hardware scan data received from the user terminal (2) in step f) and the reference hardware scan data stored in step b), and notifying the content-provider server (3) of a verification result.

2. The network authentication method as claimed in Claim 1, the user terminal (2) including a plurality of hardware components, each of which has a unique identification code, said network authentication method being further characterized, between steps a) and b), the step of:
the user terminal (2) executing the scan program for scanning the hardware components thereof to obtain the identification codes respectively of the hardware components that serve as the reference hardware scan data, and transmitting the reference hardware scan data to each of the identity authentication servers for storage in step b).

3. The network authentication method as claimed in Claim 2, **characterized in that**, during registration of the user terminal (2) at the content-provider server (3), the user terminal (2) downloads the scan program and the asymmetrical public key from the downloading unit (1) in step a), and each of the identity verification servers (4) downloads the respective encrypted information from the downloading unit (1) and stores the reference hardware scan data in step b).

4. The network authentication method as claimed in any one of Claims 1 to 3, **characterized in that**, in step c), said one of the identity verification servers (4) is determined by the content-provider server (3).

5. The network authentication method as claimed in any one of Claims 1 to 3, **characterized in that**, in step c), said one of the identity verification servers (4) is determined by the user terminal (2).

6. The network authentication method as claimed in Claim 5, **characterized in that** step c) includes the sub-steps of:
c1) in response to the login request from the user terminal (2), the content-provider server (3) sending to the user terminal (2) a selection request that includes a list of option items, which represent respectively the identity verification servers (4);
c2) the content-provider server (3) receiving a selection reply from the user terminal (2) that indicates a desired one of the option items representing said one of the identity verification servers (4); and
c3) the content-provider server (3) redirecting the user terminal (2) for connecting with said one of the identity verification servers (4) in accordance with selection reply from the user terminal (2).

7. The network authentication method as claimed in any one of Claims 1 to6, **characterized in that**, in step e) :
the user terminal (2) is operable to decrypt the encrypted web address using the asymmetrical public key; and
upon successful decryption of the encrypted web address, the user terminal (2) determines that said one of the identity verification servers (4) is currently valid to perform identity verification.

8. The network authentication method as claimed in any one of Claims 1 to 7, **characterized in that**:
in step b), the respective set of encrypted information downloaded by each of the identity verification servers (4) further includes an encrypted authorization period associated with the identity verification server; and
step e) includes the sub-steps of
e1) the user terminal (2) determining whether the encrypted web address and the encrypted authorization period associated with said one of the identity verification servers (4) are successfully decrypted using the asymmetrical public key,
e2) upon successful decryption of the encrypted web address and the encrypted authorization period, the user terminal (2) determining whether the current date is within the decrypted authorization period associated with said one of the identity verification servers (4), and
e3) upon determining that the current date is within the decrypted authorization period associated with said one of the identity verification servers (4), the user terminal (2) determining that said one of the identity verification servers (4) is currently valid to perform identity verification.

9. The network authentication method as claimed in Claim 8, **characterized in that** step e) further includes the sub-step of:
e4) when the current date is not within the decrypted authorization period associated with said one of the identity verification servers (4), the user terminal (2) sending to the downloading unit (1) an expiration notification that the authorization period associated with said one of the identity verification servers (4) has expired.

## Patentansprüche

1. Netzwerkauthentifizierungsverfahren, zu implementieren unter Verwendung eines Benutzerterminals (2), einer Herunterladeeinheit (1), einem Inhalte-Bereitstellungsserver (3) und mehreren Identitätsverifizierungsservern (4) zur sicheren Verifizierung der Identität eines Benutzers (5) des Benutzerterminals (2), wobei das Netzwerkauthentifizierungsverfahren durch die folgenden Schritte gekennzeichnet ist:
a) das Benutzerterminal (2) lädt ein Scanprogramm und einen asymmetrischen öffentlichen Schlüssel von der Herunterladeeinheit (1) herunter;
b) jeder der Identitätsverifizierungsserver (4) lädt von der Herunterladeeinheit (1) einen entsprechenden Satz verschlüsselter Informationen, die mit einem asymmetrischen privaten Schlüssel signiert sind und die eine verschlüsselte Internetadresse des Identitätsverifizierungsservers (4) enthalten, herunter und speichert Referenz-Hardwarescandaten, die sich auf das Benutzerterminal (2) beziehen und die eindeutig einer Benutzeridentifikation des Benutzers (5) entsprechen;
c) auf eine Benutzerloginanforderung vom Benutzerterminal (2) auf Zugriff auf den Inhalte-Bereitstellungsserver (3) über eine erste Kommunikationsverbindung hin überträgt der Inhalte-Bereitstellungsserver (3) eine Verifizierungsbenachrichtigung darüber, dass die Identität des Benutzers (5) verifiziert werden muss, an einen der Identitätsverifizierungsserver (4) und richtet das Benutzerterminal (2) auf die Verbindung mit dem einen der Identitätsverifizierungsserver (4) über eine zweite Kommunikationsverbindung aus;
d) der eine der Identitätsverifizierungsserver (4) überträgt den jeweiligen Satz verschlüsselter Informationen, die in Schritt b) heruntergeladen worden sind, über die zweite Kommunikationsverbindung an das Benutzerterminal (2);
e) das Benutzerterminal (2) bestimmt auf der Grundlage von zumindest dem in Schritt d) übertragenen jeweiligen Satz verschlüsselter Informationen und dem in Schritt a) heruntergeladenen asymmetrischen öffentlichen Schlüssel, ob der eine der Identitätsverifizierungsserver (4) zur Zeit Gültigkeit zum Ausführen von Identitätsverifizierung besitzt;
f) wenn das Benutzerterminal (2) bestimmt hat, dass der eine der Identitätsverifizierungsserver (4) zur Zeit Gültigkeit zum Ausführen von Identitätsverifizierung besitzt, führt es das in Schritt a) heruntergeladene Scanprogramm aus, um sich auf das Benutzerterminal (2) beziehende Hardwarescandaten zu erhalten, und überträgt die so erhaltenen Hardwarescandaten an den einen der Identitätsverifizierungsserver (4) über die zweite Kommunikationsverbindung; und
g) der eine der Identitätsverifizierungsserver (4) verifiziert die Identität des Benutzers (5) auf der Grundlage der Beziehung zwischen den vom Benutzerterminal (2) in Schritt f) empfangenen Hardwarescandaten und den in Schritt d) gespeicherten Referenz-Hardwarescandaten und benachrichtigt den Inhalte-Bereitstellungsserver (3) über ein Verifizierungsergebnis.

2. Netzwerkauthentifizierungsverfahren nach Anspruch 1, wobei das Benutzerterminal (2) mehrere Hardwarekomponenten enthält, deren jede einen eindeutigen Identifizierungscode aufweist, wobei das Netzwerkauthentifizierungsverfahren ferner, zwischen den Schritten a) und b), durch den folgenden Schritt gekennzeichnet ist:
das Benutzerterminal (2) führt das Scanprogramm zum Scannen seiner Hardwarekomponenten aus, um jeweils die Identifikationscodes der Hardwarekomponenten zu erhalten, die als die Referenz-Hardwarescandaten dienen, und überträgt die Referenz-Hardwarescandaten an jeden der Identitätsauthentifizierungsserver zum Speichern in Schritt b).

3. Netzwerkauthentifizierungsverfahren nach Anspruch 2, **gekennzeichnet dadurch, dass** während der Registrierung des Benutzerterminals (2) am Inhalte-Bereitstellungsserver (3) das Benutzerterminal (2) das Scanprogramm und den asymmetrischen öffentlichen Schlüssel von der Herunterladeeinheit (1) in Schritt a) herunterlädt und jeder der Identitätsverifizierungsserver (4) die jeweiligen verschlüsselten Informationen von der Herunterladeeinheit (1) herunterlädt und die Referenz-Hardwarescandaten in Schritt b) speichert.

4. Netzwerkauthentifizierungsverfahren nach einem der Ansprüche 1 bis 3, **dadurch gekennzeichnet, dass** in Schritt c) einer der Identitätsverifizierungsserver (4) durch den Inhalte-Bereitstellungsserver (3) bestimmt wird.

5. Netzwerkauthentifizierungsverfahren nach einem der Ansprüche 1 bis 3, **dadurch gekennzeichnet, dass** in Schritt c) einer der Identitätsverifizierungsserver (4) durch das Benutzerterminal (2) bestimmt wird.

6. Netzwerkauthentifizierungsverfahren nach Anspruch 5, **dadurch gekennzeichnet, dass** Schritt c) die folgenden Unterschritte enthält:
c1) auf die Login-Anforderung vom Benutzerterminal (2) hin sendet der Inhalte-Bereitstellungsserver (3) eine Auswahlanforderung, die eine Liste von Optionspunkten enthält, die jeweils die Identitätsverifizierungsserver (4) darstellen, an das Benutzerterminal (2);
c2) der Inhalte-Bereitstellungsserver (3) empfängt eine Auswahlantwort vom Benutzerterminal (2), die einen erwünschten der Optionspunkte, der einen der Identitätsverifizierungsserver (4) darstellt, angibt; und
c3) der Inhalte-Bereitstellungsserver (3) richtet das Benutzerterminal (2) zur Verbindung mit dem einen der Identitätsverifizierungsserver (4) gemäß der Auswahlantwort vom Benutzerterminal (2) aus.

7. Netzwerkauthentifizierungsverfahren nach einem der Ansprüche 1 bis 6, **dadurch gekennzeichnet, dass** in Schritt e):
das Benutzerterminal (2) dazu dient, die verschlüsselte Internetadresse unter Verwendung des asymmetrischen öffentlichen Schlüssels zu entschlüsseln; und
das Benutzerterminal (2) bei erfolgreicher Entschlüsselung der verschlüsselten Internetadresse bestimmt, dass einer der Identitätsverifizierungsserver (4) zur Zeit Gültigkeit zum Ausführen der Identitätsverifizierung besitzt.

8. Netzwerkauthentifizierungsverfahren nach einem der Ansprüche 1 bis 7, **dadurch gekennzeichnet, dass**:
in Schritt b) der von jedem der Identitätsverifizierungsserver (4) heruntergeladene jeweilige Satz verschlüsselter Informationen ferner einen sich auf den Identitätsverifizierungsserver beziehenden verschlüsselten Authentifizierungszeitraum enthält; und
Schritt e) die folgenden Unterschritte enthält:
e1) das Benutzerterminal (2) bestimmt, ob die verschlüsselte Internetadresse und der sich auf den einen der Identitätsverifizierungsserver (4) beziehende verschlüsselte Authentifizierungszeitraum erfolgreich unter Verwendung des asymmetrischen öffentlichen Schlüssels entschlüsselt worden sind,
e2) das Benutzerterminal (2) bestimmt bei erfolgreicher Entschlüsselung der entschlüsselten Internetadresse und des verschlüsselten Authentifizierungszeitraums, ob das aktuelle Datum innerhalb des sich auf den einen der Identitätsverifizierungsserver (4) beziehenden entschlüsselten Authentifizierungszeitraums liegt, und
e3) wenn das Benutzerterminal (2) bestimmt hat, dass das aktuelle Datum innerhalb des sich auf den einen der Identitätsverifizierungsserver (4) beziehenden entschlüsselten Authentifizierungszeitraums liegt, es bestimmt, dass der eine der Identitätsverifizierungsserver (4) zur Zeit Gültigkeit zum Ausführen von Identitätsverifizierung besitzt.

9. Netzwerkauthentifizierungsverfahren nach Anspruch 8, **dadurch gekennzeichnet, dass** Schritt e) ferner den folgenden Unterschritt enthält:
e4) wenn das aktuelle Datum nicht innerhalb des sich auf den einen der Identitätsverifizierungsserver (4) beziehenden entschlüsselten Authentifizierungszeitraums liegt, sendet das Benutzerterminal (2) eine Ablaufbenachrichtigung, darüber, dass der sich auf den einen der Identitätsverifizierungsserver (4) beziehende Authentifizierungszeitraum abgelaufen ist, an die Herunterladeeinheit (1).

## Revendications

1. Procédé d'authentification de réseau à mettre en oeuvre en utilisant un terminal d'utilisateur (2), une unité de téléchargement (1), un serveur fournisseur de contenu (3) et une pluralité de serveurs de vérification d'identité (4) en vue d'une vérification sécurisée de l'identité d'un utilisateur (5) du terminal d'utilisateur (2), ledit procédé d'authentification de réseau étant **caractérisé par** les étapes suivantes de:
a) téléchargement par le terminal d'utilisateur (2) d'un programme de balayage et d'une clé publique asymétrique à partir de l'unité de téléchargement (1) ;
b) téléchargement par chacun des serveurs de vérification d'identité (4), à partir de l'unité de téléchargement (1), d'un ensemble d'informations chiffrées respectif qui est signé avec une clé privée asymétrique et qui inclut une adresse web chiffrée du serveur de vérification d'identité (4), et de stockage des données de balayage de matériel de référence qui sont associées au terminal d'utilisateur (2) et qui correspondent de façon unique à un identifiant d'utilisateur de l'utilisateur (5) ;
c) en réponse à une demande de connexion d'utilisateur en provenance du terminal d'utilisateur (2) pour accéder au serveur fournisseur de contenu (3) à travers une première liaison de communication, de transmission par le serveur fournisseur de contenu (3), à l'un des serveurs de vérification d'identité (4) d'une notification de vérification selon laquelle l'identité de l'utilisateur (5) doit être vérifiée, et de redirection du terminal d'utilisateur (2) pour connexion audit un des serveurs de vérification d'identité (4) à travers une seconde liaison de communication ;
d) transmission par ledit un des serveurs de vérification d'identité (4) au terminal d'utilisateur (2) de l'ensemble d'informations chiffrées respectif téléchargé à l'étape b), à travers la seconde liaison de communication ;
e) détermination par le terminal d'utilisateur (2), sur la base d'au moins l'ensemble d'informations chiffrées respectif transmis à l'étape d) et de la clé publique asymétrique téléchargée à l'étape a), si ledit un des serveurs de vérification d'identité (4) est actuellement valide pour effectuer une vérification d'identité ;
f) lorsqu'il est déterminé que ledit un des serveurs de vérification d'identité (4) est actuellement valide pour effectuer une vérification d'identité, exécution par le terminal d'utilisateur (2) du programme de balayage téléchargé à l'étape a) en vue d'obtenir des données de balayage de matériel associées au terminal d'utilisateur (2), et transmission des données de balayage de matériel ainsi obtenues audit un des serveurs de vérification d'identité (4) à travers la seconde liaison de communication ; et
g) vérification par ledit un des serveurs de vérification d'identité (4) de l'identité de l'utilisateur (5) sur la base de la relation entre les données de balayage de matériel reçues en provenance du terminal d'utilisateur (2) à l'étape f) et des données de balayage de matériel de référence stockées à l'étape b), et notification au serveur fournisseur de contenu (3) d'un résultat de vérification.

2. Procédé d'authentification de réseau selon la revendication 1, le terminal d'utilisateur (2) incluant une pluralité de composants matériels, chacun d'entre eux ayant un code d'identification unique, ledit procédé d'authentification de réseau étant en outre caractérisé, entre les étapes a) et b), par l'étape :
d'exécution par le terminal d'utilisateur (2) du programme de balayage en vue de balayer les composants matériels connexes afin d'obtenir les codes d'identification, respectivement des composants matériels qui servent de données de balayage de matériel de référence, et de transmission des données de balayage de matériel de référence à chacun des serveurs d'authentification d'identité à des fins de stockage, à l'étape b).

3. Procédé d'authentification de réseau selon la revendication 2, **caractérisé en ce que**, au cours de l'enregistrement du terminal d'utilisateur (2) auprès du serveur fournisseur de contenu (3), le terminal d'utilisateur (2) télécharge le programme de balayage et la clé publique asymétrique à partir de l'unité de téléchargement (1) à l'étape a), et chacun des serveurs de vérification d'identité (4) télécharge les informations chiffrées respectives à partir de l'unité de téléchargement (1) et stocke les données de balayage de matériel de référence à l'étape b).

4. Procédé d'authentification de réseau selon l'une quelconque des revendications 1 à 3, **caractérisé en ce que**, à l'étape c), ledit un des serveurs de vérification d'identité (4) est déterminé par le serveur fournisseur de contenu (3).

5. Procédé d'authentification de réseau selon l'une quelconque des revendications 1 à 3, **caractérisé en ce que**, à l'étape c), ledit un des serveurs de vérification d'identité (4) est déterminé par le terminal d'utilisateur (2).

6. Procédé d'authentification de réseau selon la revendication 5, **caractérisé en ce que** l'étape c) inclut les sous-étapes de :
c1) en réponse à la demande de connexion en provenance du terminal d'utilisateur (2), envoi par le serveur fournisseur de contenu (3) au terminal d'utilisateur (2) d'une demande de sélection qui inclut une liste d'éléments d'option, qui représentent respectivement les serveurs de vérification d'identité (4) ;
c2) réception par le serveur de fournisseur de contenu (3) d'une réponse de sélection en provenance du terminal d'utilisateur (2) qui indique un élément souhaité parmi les éléments d'option représentant ledit un des serveurs de vérification d'identité (4) ; et
c3) redirection par le serveur de fournisseur de contenu (3) du terminal d'utilisateur (2) pour connexion audit un des serveurs de vérification d'identité (4) conformément à la réponse de sélection en provenance du terminal d'utilisateur (2).

7. Procédé d'authentification de réseau selon l'une quelconque des revendications 1 à 6, **caractérisé en ce que**, à l'étape e) :
le terminal d'utilisateur (2) est exploité de manière à déchiffrer l'adresse web chiffrée en utilisant la clé publique asymétrique ; et
suite au déchiffrement réussi de l'adresse web chiffrée, le terminal d'utilisateur (2) détermine que ledit un des serveurs de vérification d'identité (4) est actuellement valide pour réaliser une vérification d'identité.

8. Procédé d'authentification de réseau selon l'une quelconque des revendications 1 à 7, **caractérisé en ce que** :
à l'étape b), l'ensemble d'informations chiffrées respectif téléchargé par chacun des serveurs de vérification d'identité (4) inclut en outre une période d'autorisation chiffrée associée au serveur de vérification d'identité ; et
l'étape e) inclut les sous-étapes de :
e1) détermination par le terminal d'utilisateur (2) si l'adresse web chiffrée et la période d'autorisation chiffrée associée audit un des serveurs de vérification d'identité (4) sont déchiffrées avec succès en faisant appel à la clé publique asymétrique ;
e2) suite au déchiffrement réussi de l'adresse web chiffrée et de la période d'autorisation chiffrée, détermination par le terminal d'utilisateur (2) si la date en cours se situe dans la période d'autorisation déchiffrée associée audit un des serveurs de vérification d'identité (4) ; et
e3) suite à la détermination que la date en cours se situe dans la période d'autorisation déchiffrée associée audit un des serveurs de vérification d'identité (4), détermination par le terminal d'utilisateur (2) que ledit un des serveurs de vérification d'identité (4) est actuellement valide en vue de mettre en oeuvre une vérification d'identité.

9. Procédé d'authentification de réseau selon la revendication 8, **caractérisé en ce que** l'étape e) inclut en outre la sous-étape de :
e4) si la date en cours n'est pas située dans la période d'autorisation déchiffrée associée audit un des serveurs de vérification d'identité (4), envoi par le terminal d'utilisateur (2) à l'unité de téléchargement (1) une notification d'expiration selon laquelle la période d'autorisation associée audit un des serveurs de vérification d'identité (4) a expiré.
